# EUROPEAN PATENT APPLICATION

(11) **EP 4 418 511 A1**
(43) Date of publication of application: **21.08.2024**
(21) Application number: 23179269.8
(22) Date of filing: 14.06.2023
(51) Int. Cl.: H02M 1/00, H02M 1/42, H02M 3/00, H02M 3/07, H02M 7/48, H02M 7/483, H02M 1/15, H02M 1/44

(54) **FLYING-CAPACITOR CONVERTER WITH ZERO-VOLTAGE SWITCHING**

(30) Priority: 15.02.2023 CN 202310115548
(71) Applicant: Delta Electronics Inc., Taoyuan City 320023 (TW)
(72) Inventor: TUNG, Feng-Hsuan, 320023 Taoyuan City (TW); TSAI, Terng-Wei, 320023 Taoyuan City (TW); HUANG, Chia-Hsiong, 320023 Taoyuan City (TW); LIN, Yu-Jen, 320023 Taoyuan City (TW)
(74) Representative: 2K Patentanwälte Blasberg Kewitz & Reichel

(57) **Abstract**

A flying capacitor (FC, FC1, FC2, FC3, FC-1, FC-2) converter with zero-zero switching includes an input inductor (Lboost, Lboost-1, Lboost-2), a fast-switching switch leg (11), a slow-switching switch leg (12), at least one flying capacitor (FC, FC1, FC2, FC3, FC-1, FC-2), a resonant tank (13), and an output capacitor (Co). The fast-switching switch leg (11) included an upper leg (111) having a plurality of upper switches (Q₁₁, Q₁₂, Q₁₃, Q₁₄) and a lower leg (112) having a plurality of lower switches (Q₂₁, Q₂₂, Q₂₃, Q₂₄). The slow-switching switch leg (12) includes a slow-switching upper switch (Q₁) and a slow-switching lower switch (Q₂), and the slow-switching upper switch (Q₁) and the slow-switching lower switch (Q₂) are coupled at a second middle node (N2). The at least one flying capacitor (FC, FC1, FC2, FC3, FC-1, FC-2) is correspondingly coupled between the upper node (N11, N12, N13) and the lower node (N21, N22, N23). The resonant tank (13) includes a resonant inductor (Lr) and a resonant capacitor (Cr), and the resonant inductor (Lr) and the resonant capacitor (Cr) are coupled in series between the first middle node (N1) and the second middle node (N2).

## Description

### BACKGROUND

### Technical Field

The present disclosure relates to a flying-capacitor converter, and more particularly to a flying-capacitor converter with zero-voltage switching.

### Description of Related Art

The statements in this section merely provide background information related to the present disclosure and do not necessarily constitute prior art.

In recent years, the power factor corrector (PFC) with high-power density often uses flying-capacitor converter to achieve higher power density and better efficiency. However, since the existing structure is difficult to implement the zero-voltage switching (ZVS), it is impossible to further increase the power density and efficiency. In addition, the heat dissipation of the circuit is also a big problem.

Therefore, the present disclosure provides a flying-capacitor converter with zero-voltage switching to reach a higher voltage ratio by increasing a voltage level of the capacitor, thereby implementing the expansion of boosting voltage. The zero-voltage switching of the switch is realized by changing the switching frequency and using the resonant tank. Moreover, the present disclosure can operate in DC-to-DC boost, DC-to-DC buck, or form a Totem-Pole power factor corrector (PFC) to achieve power factor correction, or as an inverter. In addition, the integrated coupling structure with the resonant inductor and the input inductor is used to increase the Integration and power density.

### SUMMARY

An objective of the present disclosure is to provide a flying-capacitor converter with zero-voltage switching to solve the problems of existing technology.

In order to achieve the above-mentioned objective, the flying-capacitor converter with zero-voltage switching receives an input power source and converts the input power source into an output power source. The flying-capacitor converter includes an input inductor, a fast-switching switch leg, a slow-switching switch leg, at least one flying capacitor, a resonant tank, and an output capacitor. A first end of the input inductor receives the input power source. The fast-switching switch leg includes an upper leg having a plurality of upper switches, and a lower leg having a plurality of lower switches; a first end of the upper leg and a first end of the lower leg are coupled at a first middle node, and the first middle node is coupled to a second end of the input inductor. Any two upper switches are coupled in series at an upper node and any two lower switches are coupled in series at a lower node. The slow-switching switch leg includes a slow-switching upper switch and a slow-switching lower switch, and the slow-switching upper switch and the slow-switching lower switch are coupled at a second middle node. The at least one flying capacitor is correspondingly coupled between the upper node and the lower node. The resonant tank includes a resonant inductor and a resonant capacitor, and the resonant inductor and the resonant capacitor are coupled in series between the first middle node and the second middle node. The output capacitor is coupled in parallel to the slow-switching switch leg, and outputs the output power source.

In one embodiment, the flying-capacitor converter provides a three-level output. The upper leg includes two upper switches, respectively a first upper switch and a second upper switch, and the first upper switch and the second upper switch are coupled at a first upper node. The lower leg includes two lower switches, respectively a first lower switch and a second lower switch, and the first lower switch and the second lower switch are coupled at a first lower node. The first upper switch and the first lower switch are coupled at the first middle node. The number of the at least one flying capacitor is one, and the flying capacitor is coupled between the first upper node and the first lower node.

In one embodiment, the flying-capacitor converter provides a five-level output. The upper leg includes four upper switches, respectively a first upper switch, a second upper switch, a third upper switch, and a fourth upper switch. The first upper switch and the second upper switch are coupled at a first upper node, the second upper switch and the third upper switch are coupled at a second upper node, and the third upper switch and the fourth upper switch are coupled at a third upper node. The lower leg includes four lower switches, respectively a first lower switch, a second lower switch, a third lower switch, and a fourth lower switch. The first lower switch and the second lower switch are coupled at a first lower node, the second lower switch and the third lower switch are coupled at a second lower node, and the third lower switch and the fourth lower switch are coupled at a third lower node. The first upper switch and the first lower switch are coupled at the first middle node. The number of the at least one flying capacitor is three, respectively a first flying capacitor, a second flying capacitor, and a third flying capacitor. The first flying capacitor is coupled between the first upper node and the first lower node, the second flying capacitor is coupled between the second upper node and the second lower node, and the third flying capacitor is coupled between the third upper node and the third lower node.

In one embodiment, the input inductor and the resonant inductor form an integrated coupling structure.

In one embodiment, the flying-capacitor converter operates in a N-phase structure. The N-phase flying-capacitor converter includes N sets of the input inductors, N sets of the fast-switching switch legs, N sets of the at least one flying capacitor, N sets of the resonant tanks, and one set of the slow-switching switch leg and one set of the output capacitor.

In one embodiment, the input inductor in each phase is correspondingly coupled with the resonant inductor of the resonant tank.

In one embodiment, the two resonant inductors between two phases are cross-coupled.

In one embodiment, when input power source and the output power source are both DC power sources, the number of the resonant capacitor is one. The resonant capacitor and the resonant inductor are coupled in series to form a series-connected branch. A first end of the series-connected branch is coupled to the first middle node, and a second end of the series-connected branch is coupled a second end of the upper leg.

In one embodiment, when input power source and the output power source are both DC power sources, the number of the resonant capacitor is one. The resonant capacitor and the resonant inductor are coupled in series to form a series-connected branch. A first end of the series-connected branch is coupled to the first middle node, and a second end of the series-connected branch is coupled to a second end of the lower leg.

In one embodiment, when input power source and the output power source are both DC power sources, the number of the resonant capacitors is two, respectively a first resonant capacitor and a second resonant capacitor. The resonant inductor is coupled to a commonly-connected node between the first resonant capacitor and the second resonant capacitor to form two branches, respectively a first branch and a second branch. A first end of the first branch is coupled to the first middle node, and a second end of the first branch is coupled to the second end of the upper leg. A first end of the second branch is coupled to the first middle node, and a second end of the second branch is coupled to the second end of the lower leg.

In one embodiment, when the input power source is an AC power source and the output power source is a DC power source, the flying-capacitor converter includes two input inductors, two fast-switching switch legs, two flying capacitors, and a resonant tank and an output capacitor. The resonant tank is coupled between two first middle nodes of the two fast-switching switch legs.

Accordingly, the flying-capacitor converter with zero-voltage switching of the present disclosure has following advantages: 1. The LC resonant tank is added to make the Totem-Pole power factor corrector have full switch zero-voltage switching function, thereby reducing switching loss to increase power conversion efficiency; 2. The LC resonant tank is added to accelerate the release of the electric energy stored in the parasitic capacitance of the switch, thereby suppressing the surge when the switch is switched to protect the switch; 3. A small input inductor current ripple is implemented so that a smaller EMI level may be selected and used. The higher voltage level is designed and the smaller inductance of the input inductor is selected; 4. The number of the flying capacitors with switching of switches can increase cross-voltage type of input inductor. Therefore, at both ends of the inductor, it can be charged and discharged with a smaller cross-voltage (dv/dt). Since the dv/dt of the inductor is decreased, the ripple current is smaller and the loss of the inductor is decreased; 5. Since the level of the flying capacitor can be expanded, it has the expansion of the voltage level and the voltage-boosting ratio; 6. By the resonance of the internal resonant tank, the parasitic capacitance of the switch to be turned on can be discharged during the dead time of the switch so that it can achieve zero voltage conduction; 7. The zero-voltage switching is implemented to reduce heat dissipation requirements for switch modules; 8. The zero-voltage switching increases the switching frequency and reduces the size of the magnetic components; 9. The integrated coupling structure with the resonant inductor and the input inductor is used to acquire the benefits of magnetic flux cancellation so as to increase efficiency while increasing integration and power density; 10. Under the uses of coupling inductors, no additional magnetic component is required.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a circuit diagram of a flying-capacitor converter with zero-voltage switching according to a first embodiment of the present disclosure.
FIG. 2 is a circuit diagram of the flying-capacitor converter with zero-voltage switching according to a second embodiment of the present disclosure.
FIG. 3 is a block circuit diagram of the flying-capacitor converter with zero-voltage switching operating in a multi-phase parallel structure according to the present disclosure.
FIG. 4A is a circuit diagram of an inductor coupling of the flying-capacitor converter with zero-voltage switching operating in the multi-phase parallel structure according to a first embodiment of the present disclosure.
FIG. 4B is a circuit diagram of an inductor coupling of the flying-capacitor converter with zero-voltage switching operating in the multi-phase parallel structure according to a second embodiment of the present disclosure.
FIG. 5 is a circuit diagram of the inductor coupling of the flying-capacitor converter with zero-voltage switching operating in a single-phase parallel structure according to the present disclosure.
FIG. 6A to FIG. 6C are circuit diagrams of the flying-capacitor converter with zero-voltage switching having different resonant capacitors according to the present disclosure.
FIG. 7 is a circuit diagram of the flying-capacitor converter with zero-voltage switching applied in an AC-to-DC conversion according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

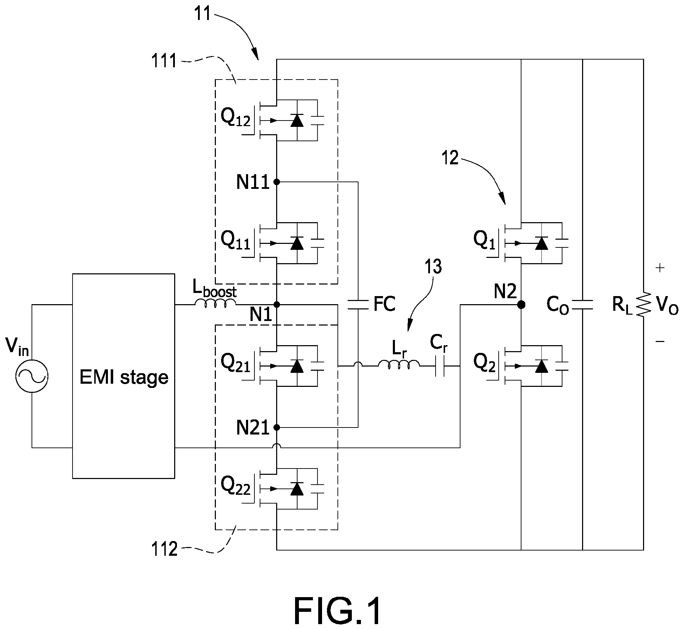

Please refer to FIG. 1, which shows a circuit diagram of a flying-capacitor converter with zero-voltage switching according to a first embodiment of the present disclosure. The flying-capacitor converter with zero-voltage switching (hereinafter referred to as flying-capacitor converter) receives an input power source Vin and converts the input power source Vin into an output power source Vo. In one embodiment, if the input power source Vin is an AC power source and the converted output power source Vo is a DC power source, the flying-capacitor converter may be an AC-to-DC converter, or a power factor corrector (PFC). However, this is not a limitation, which means that the flying-capacitor converter in the present disclosure may be used to convert different power types according to power requirements.

The flying-capacitor converter includes an input inductor Lboost, a fast-switching switch leg 11, a slow-switching switch leg 12, at least one flying capacitor FC, a resonant tank 13, and an output capacitor Co.

The input inductor Lboost has a first end and a second end. The first end of the input inductor Lboost receives the input power source Vin. The fast-switching switch leg 11 includes an upper leg 111 and a lower leg 12. The upper leg 111 includes a plurality of upper switches Q₁₁, Q₁₂, and the lower leg 112 includes a plurality of lower switches Q₂₁, Q₂₂. The upper leg 111 and the lower leg 112 are coupled at a first middle node N1, and the first middle node N1 is coupled to a second end of the input inductor Lboost. Any two upper switches Q₁₁, Q₁₂ are coupled in series at an upper node N11 and any two lower switches Q₂₁, Q₂₂ are coupled in series at a lower node N21. In this embodiment, the fast-switching switch leg 11 is coupled to the AC input power source Vin through the input inductor Lboost.

The slow-switching switch leg 12 includes a slow-switching upper switch Q₁ and a slow-switching lower switch Q₂, and the slow-switching upper switch Q₁ and the slow-switching lower switch Q₂ are coupled at a second middle node N2. In this embodiment, the slow-switching switch leg 12 is directly coupled to the AC input power source Vin, and is controlled by a frequency of the mains (i.e., the frequency of the AC input power source Vin).

The at least one flying capacitor FC is correspondingly coupled between the upper node N11 and the lower node N21. The resonant tank 13 includes a resonant inductor Lr and a resonant capacitor Cr. The resonant inductor Lr and the resonant capacitor Cr are coupled in series between the first middle node N1 and the second middle node N2. The output capacitor Co is coupled in parallel to the slow-switching switch leg 12 and outputs the output power source Vo.

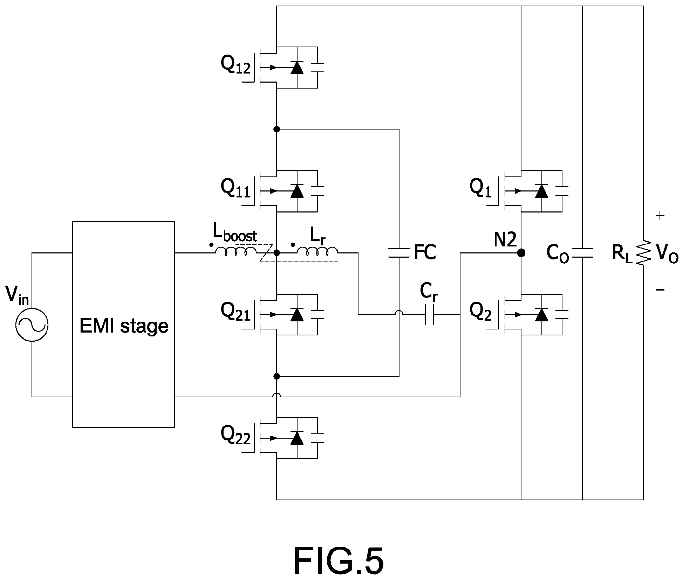

Please refer to FIG. 5, which shows a circuit diagram of the inductor coupling of the flying-capacitor converter with zero-voltage switching operating in a single-phase parallel structure according to the present disclosure. In one embodiment, the input inductor Lboost and the resonant inductor Lr are two different inductors or two sets of coils are wound on two different iron cores. Alternatively, the input inductor Lboost and the resonant inductor Lr form an integrated coupling structure, that is, the input inductor L and the resonant inductor Lr share the same iron core, and achieve an integrated structure of the common coupling magnetic path as shown in FIG. 5.

Specifically, take the flying-capacitor converter to provide a three-level output as an example shown in FIG. 1. In this embodiment, the upper leg 111 includes two upper switches, respectively a first upper switch Q₁₁ and a second upper switch Q₁₂, and the first upper switch Q₁₁ and the second upper switch Q₁₂ are coupled at a first upper node N11. The lower leg 112 includes two lower switches, respectively a first lower switch Q₂₁ and a second lower switch Q₂₂, and the first lower switch Q₂₁ and the second lower switch Q₂₂ are coupled at a first lower node N21. The first upper switch Q₁₁ and the first lower switch Q₂₁ are coupled at the first middle node N1. The number of the at least one flying capacitor FC is one, and the flying capacitor FC is coupled between the first upper node N11 and the first lower node N21.

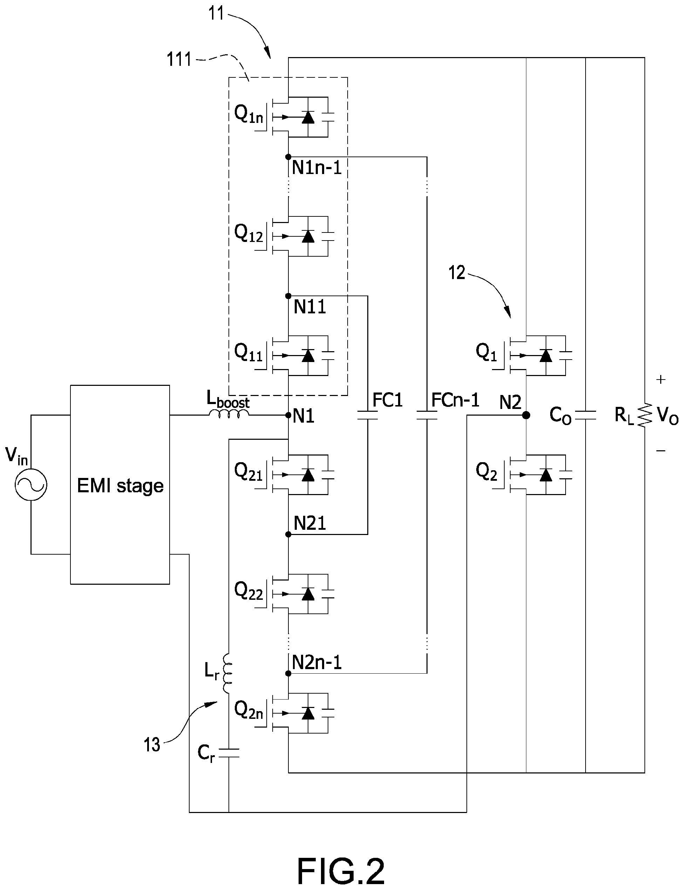

Please refer to FIG. 2, which shows a circuit diagram of the flying-capacitor converter with zero-voltage switching according to a second embodiment of the present disclosure. The difference between the embodiment shown in FIG. 2 and the embodiment shown in FIG. 1 is that the flying-capacitor converter provides multi-level (N-level) output. Therefore, the number of switches of the upper leg 111, the number of switches of the lower leg 112, and the number of the flying capacitors FC are accordingly increased.

Take the flying-capacitor converter to provide a five-level output as an example, the upper leg 111 includes four upper switches, respectively a first upper switch Q₁₁, a second upper switch Q₁₂, a third upper switch Q₁₃, and a fourth upper switch Q₁₄. The first upper switch Q₁₁ and the second upper switch Q₁₂ are coupled at a first upper node N11, the second upper switch Q₁₂ and the third upper switch Q₁₃ are coupled at a second upper node N12, and the third upper switch Q₁₃ and the fourth upper switch Q₁₄ are coupled at a third upper node N13.

The lower leg 112 includes four lower switches, respectively a first lower switch Q₂₁, a second lower switch Q₂₂, a third lower switch Q₂₃, and a fourth lower switch Q₂₄. The first lower switch Q₂₁ and the second lower switch Q₂₂ are coupled at a first lower node N21, the second lower switch Q₂₂ and the third lower switch Q₂₃ are coupled at a second lower node N22, and the third lower switch Q₂₃ and the fourth lower switch Q₂₄ are coupled at a third lower node N23.

The first upper switch Q₁₁ and the first lower switch Q₂₁ are coupled at the first middle node N1. The number of the flying capacitors FC is three, respectively a first flying capacitor FC1, a second flying capacitor FC2, and a third flying capacitor FC3. The first flying capacitor FC1 is coupled between the first upper node N11 and the first lower node N21, the second flying capacitor FC2 is coupled between the second upper node N12 and the second lower node N22, and the third flying capacitor FC3 is coupled between the third upper node N13 and the third lower node N23.

Incidentally, the embodiment of the flying-capacitor converter providing more than five-level output is similar to the three-level and five-level structures, so the detail description is omitted here for conciseness.

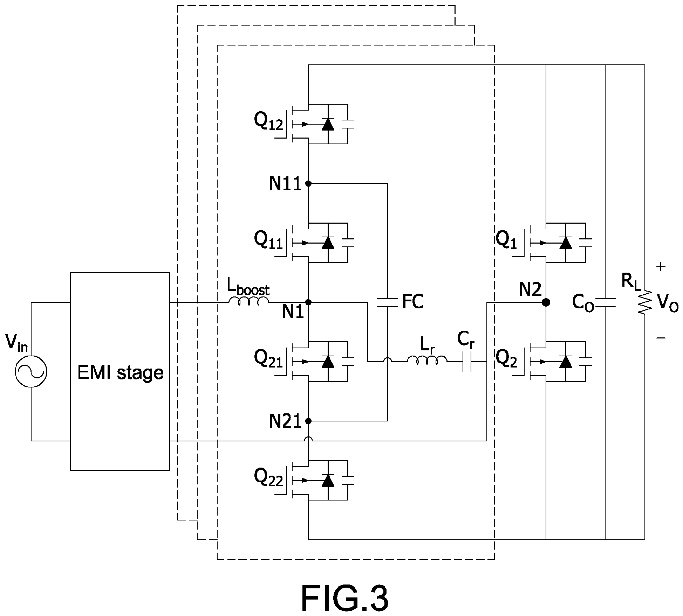

Please refer to FIG. 3, which shows a block circuit diagram of the flying-capacitor converter with zero-voltage switching operating in a multi-phase parallel structure according to the present disclosure. Different from FIG. 1 and FIG. 2, the flying-capacitor converter with zero-voltage switching of the present disclosure is applied to a single-phase structure, and the present disclosure may also realize the multi-phase parallel structure shown in FIG. 3. Specifically, as shown in FIG. 3, when the flying-capacitor converter operates in a N-phase structure, the N-phase flying-capacitor converter includes N sets of input inductors Lboost, N sets of fast-switching switch legs 11, N sets of the at least one flying capacitor FC, N sets of resonant tanks 13, and one set of slow-switching switch leg 12 and one set of output capacitor Co.

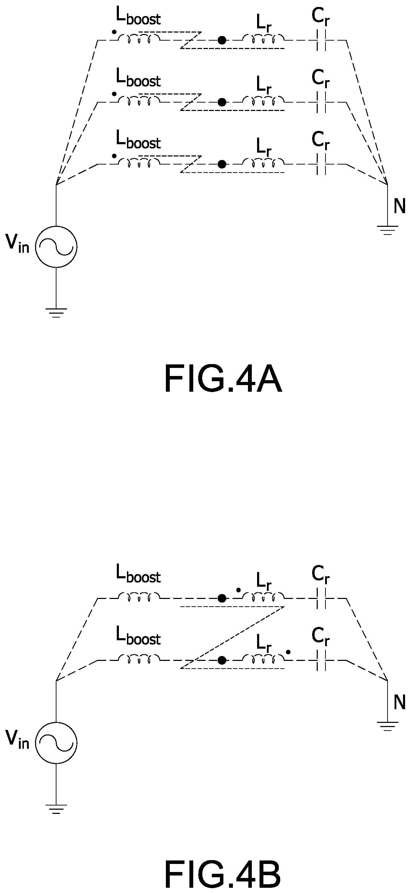

Under the multi-phase parallel structure shown in FIG. 3, the inductor coupling has different embodiments. Please refer to FIG. 4A, which shows a circuit diagram of an inductor coupling of the flying-capacitor converter with zero-voltage switching operating in the multi-phase parallel structure according to a first embodiment of the present disclosure. Specifically, the input inductor Lboost in each phase is correspondingly coupled with the resonant inductor Lr of the resonant tank 13. Alternatively, please refer to FIG. 4B, which shows a circuit diagram of an inductor coupling of the flying-capacitor converter with zero-voltage switching operating in the multi-phase parallel structure according to a second embodiment of the present disclosure. Specifically, two resonant inductors Lr between two phases are cross-coupled.

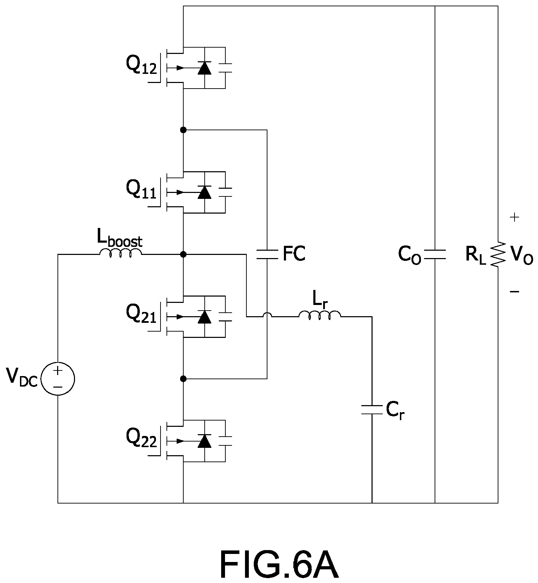

As mentioned above, the resonant tank 13 (including the resonant inductor Lr and the resonant capacitor Cr) may be used not only in the AC-to-DC conversion circuit, but also in the DC-to-DC conversion circuit. Please refer to FIG. 6A to FIG. 6C, which show circuit diagrams of the flying-capacitor converter with zero-voltage switching having different resonant capacitors according to the present disclosure. As shown in FIG. 6A, the flying-capacitor converter operates under a DC power source V_{DC} as the input power source Vin, the output power source Vo is a DC power source, and the number of the resonant capacitor Cr is one. The resonant capacitor Cr and the resonant inductor Lr are coupled in series to form a series-connected branch. A first end of the series-connected branch is coupled to the first middle node N1 (i.e., a commonly-connected node between a first end of the upper leg 111 and a first end of the lower leg 112), and a second end of the series-connected branch is coupled to the second lower switch Q₂₂ (i.e., a second end of the lower leg 112).

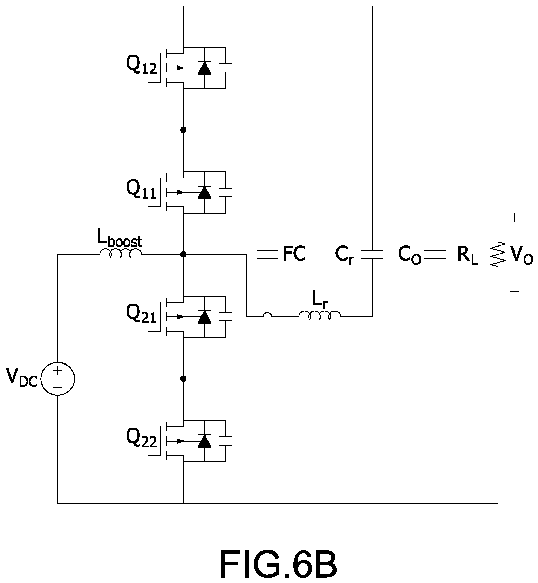

As shown in FIG. 6B, the flying-capacitor converter operates under a DC power source V_{DC} as the input power source Vin, the output power source Vo is a DC power source, and the number of the resonant capacitor Cr is one. The resonant capacitor Cr and the resonant inductor Lr are coupled in series to form a series-connected branch. A first end of the series-connected branch is coupled to the first middle node N1 (i.e., the commonly-connected node between the first end of the upper leg 111 and the first end of the lower leg 112), and a second end of the series-connected branch is coupled to the second upper switch Q₁₂ (i.e., a second end of the upper leg 111).

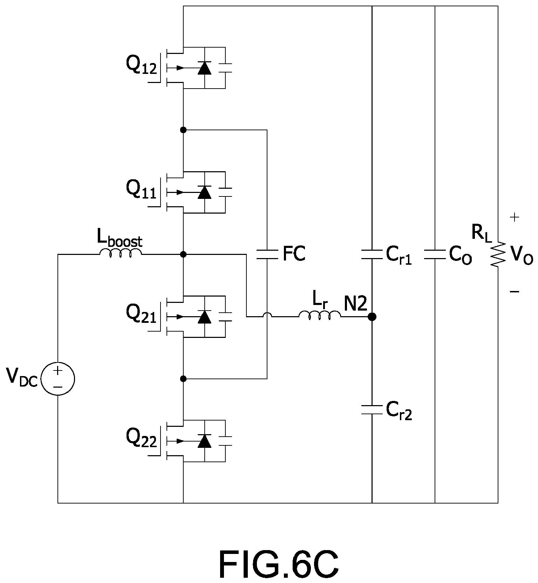

As shown in FIG. 6C, the flying-capacitor converter operates under a DC power source V_{DC} as the input power source Vin, the output power source Vo is a DC power source, and the number of the resonant capacitors Cr is two, respectively a first resonant capacitor Cr1 and a second resonant capacitor Cr2. The resonant inductor Lr is coupled to a commonly-connected node between the first resonant capacitor Cr1 and the second resonant capacitor Cr2 to form two branches, respectively a first branch and a second branch. A first end of the first branch is coupled to the first middle node N1, and a second end of the first branch is coupled to the second upper switch Q₁₂ (i.e., the second end of the upper leg 111). A first end of the second branch is coupled to the first middle node N1, and a second end of the second branch is coupled to the second lower switch Q₂₂.

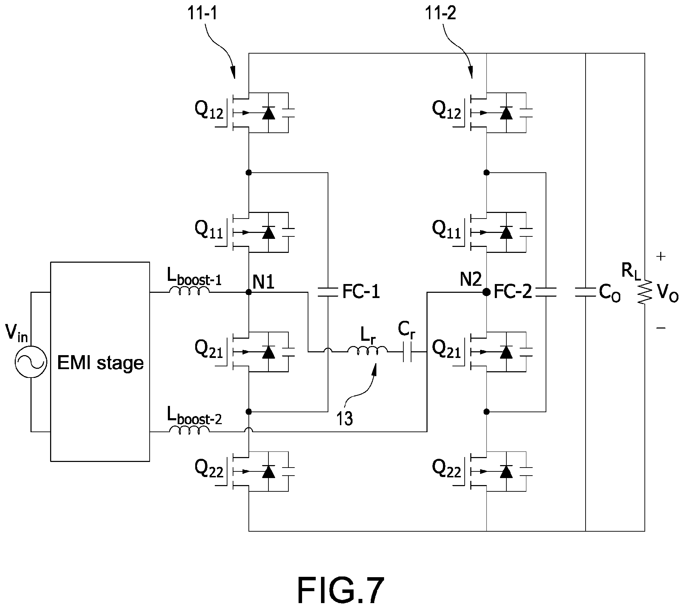

In addition to the previously flying-capacitance converter may be applied in the AC-to-DC conversion circuit and the DC-to-DC conversion circuit, it may also be applied to the DC-to-AC conversion circuit (i.e., the inverter circuit). Please refer to FIG. 7, which shows a circuit diagram of the flying-capacitor converter with zero-voltage switching applied in an AC-to-DC conversion according to the present disclosure. The flying-capacitor converter operates under an AC power source as the input power source Vin, the output power source Vo is a DC power source, and the flying-capacitor converter includes two input inductors Lboost-1, Lboost-2, two fast-switching switch legs 11-1, 11-2, two flying capacitors FC-1, FC-2, and one resonant tank 13 and one output capacitor Co. The first input inductor Lboost-1 is coupled to the first middle node N1 of the first fast-switching switch leg 11-1, and the second input inductor Lbbost-2 is coupled to the second middle node N2 of the second fast-switching switch leg 11-2. The first flying capacitor FC-1 is coupled between a commonly-connected node between the first upper switch Q₁₁ and the second upper switch Q₁₂ of the first fast-switching switch leg 11-1 and a commonly-connected node between the first lower switch Q₂₁ and the second lower switch Q₂₂ of the first fast-switching switch leg 11-1. The second flying capacitor FC-2 is coupled between a commonly-connected node between the first upper switch Q₁₁ and the second upper switch Q₁₂ of the second fast-switching switch leg 11-2 and a commonly-connected node between the first lower switch Q₂₁ and the second lower switch Q₂₂ of the second fast-switching switch leg 11-2. The resonant tank 13 is coupled between the first middle node N1 of the first fast-switching switch leg 11-1 and the second middle node N2 of the second fast-switching switch leg 11-2.

In summary, the present disclosure can reach a higher voltage ratio by increasing a voltage level of the capacitor, thereby implementing the expansion of boosting voltage. The zero-voltage switching of the switch is realized by changing the switching frequency and using the resonant tank. Moreover, the present disclosure can operate in DC-to-DC boost, DC-to-DC buck, or form a Totem-Pole power factor corrector (PFC) to achieve power factor correction, or as an inverter. In addition, the integrated coupling structure with the resonant inductor and the input inductor is used to increase the Integration and power density.

In summary, the present disclosure has the following features and advantages:
1. The LC resonant tank is added to make the Totem-Pole power factor corrector have full switch zero-voltage switching function, thereby reducing switching loss to increase power conversion efficiency.
2. The LC resonant tank is added to accelerate the release of the electric energy stored in the parasitic capacitance of the switch, thereby suppressing the surge when the switch is switched to protect the switch.
3. A small input inductor current ripple is implemented so that a smaller EMI level may be selected and used. The higher voltage level is designed and the smaller inductance of the input inductor is selected.
4. The number of the flying capacitors with switching of switches can increase cross-voltage type of input inductor. Therefore, at both ends of the inductor, it can be charged and discharged with a smaller cross-voltage (dv/dt). Since the dv/dt of the inductor is decreased, the ripple current is smaller and the loss of the inductor is decreased.
5. Since the level of the flying capacitor can be expanded, it has the expansion of the voltage level and the voltage-boosting ratio.
6. By the resonance of the internal resonant tank, the parasitic capacitance of the switch to be turned on can be discharged during the dead time of the switch so that it can achieve zero voltage conduction.
7. The zero-voltage switching is implemented to reduce heat dissipation requirements for switch modules.
8. The zero-voltage switching increases the switching frequency and reduces the size of the magnetic components.
9. The integrated coupling structure with the resonant inductor and the input inductor is used to acquire the benefits of magnetic flux cancellation so as to increase efficiency while increasing integration and power density.
10. Under the uses of coupling inductors, no additional magnetic component is required.

## Claims

1. A flying-capacitor converter with zero-voltage switching, configured to receive an input power source (Vin) and convert the input power source (Vin) into an output power source (Vo), **characterized in that** the flying-capacitor converter comprising:
an input inductor (Lboost, Lboost-1, Lboost-2), a first end of the input inductor (Lboost, Lboost-1, Lboost-2) configured to receive the input power source (Vin),
a fast-switching switch leg (11), comprising an upper leg (111) having a plurality of upper switches (Q₁₁, Q₁₂, Q₁₃, Q₁₄), and a lower leg (112) having a plurality of lower switches (Q₂₁, Q₂₂, Q₂₃, Q₂₄); a first end of the upper leg (111) and a first end of the lower leg (112) coupled at a first middle node (N1), and the first middle node (N1) coupled to a second end of the input inductor (Lboost, Lboost-1, Lboost-2); any two upper switches (Q₁₁, Q₁₂, Q₁₃, Q₁₄) coupled in series at an upper node (N11, N12, N13) and any two lower switches (Q₂₁, Q₂₂, Q₂₃, Q₂₄) coupled in series at a lower node (N21, N22, N23),
a slow-switching switch leg (12), comprising a slow-switching upper switch (Q₁) and a slow-switching lower switch (Q₂), and the slow-switching upper switch (Q₁) and the slow-switching lower switch (Q₂) coupled at a second middle node (N2),
at least one flying capacitor (FC, FC1, FC2, FC3, FC-1, FC-2), correspondingly coupled between the upper node (N11, N12, N13) and the lower node (N21, N22, N23),
a resonant tank (13), comprising a resonant inductor (Lr) and a resonant capacitor (Cr), and the resonant inductor (Lr) and the resonant capacitor (Cr) coupled in series between the first middle node (N1) and the second middle node (N2), and
an output capacitor (Co), coupled in parallel to the slow-switching switch leg (12), and configured to output the output power source (Vo).

2. The flying-capacitor converter with zero-voltage switching as claimed in claim 1, wherein the flying-capacitor converter is configured to provide a three-level output,
the upper leg (111) comprising two upper switches (Q₁₁, Q₁₂, Q₁₃, Q₁₄), respectively a first upper switch (Q₁₁, Q₁₂, Q₁₃, Q₁₄) and a second upper switch (Q₁₁, Q₁₂, Q₁₃, Q₁₄), and the first upper switch (Q₁₁, Q₁₂, Q₁₃, Q₁₄) and the second upper switch (Q₁₁, Q₁₂, Q₁₃, Q₁₄) coupled at a first upper node (N11, N12, N13),
the lower leg (112) comprising two lower switches (Q₂₁, Q₂₂, Q₂₃, Q₂₄), respectively a first lower switch (Q₂₁, Q₂₂, Q₂₃, Q₂₄) and a second lower switch (Q₂₁, Q₂₂, Q₂₃, Q₂₄), and the first lower switch (Q₂₁, Q₂₂, Q₂₃, Q₂₄) and the second lower switch (Q₂₁, Q₂₂, Q₂₃, Q₂₄) coupled at a first lower node (N21, N22, N23),
wherein the first upper switch (Q₁₁, Q₁₂, Q₁₃, Q₁₄) and the first lower switch (Q₂₁, Q₂₂, Q₂₃, Q₂₄) are coupled at the first middle node (N1),
wherein the number of the at least one flying capacitor (FC, FC1, FC2, FC3, FC-1, FC-2) is one, and the flying capacitor (FC, FC1, FC2, FC3, FC-1, FC-2) is coupled between the first upper node (N11, N12, N13) and the first lower node (N21, N22, N23).

3. The flying-capacitor converter with zero-voltage switching as claimed in claim 1, wherein the flying-capacitor converter is configured to provide a five-level output,
the upper leg (111) comprising four upper switches (Q₁₁, Q₁₂, Q₁₃, Q₁₄), respectively a first upper switch (Q₁₁, Q₁₂, Q₁₃, Q₁₄), a second upper switch (Q₁₁, Q₁₂, Q₁₃, Q₁₄), a third upper switch (Q₁₁, Q₁₂, Q₁₃, Q₁₄), and a fourth upper switch (Q₁₁, Q₁₂, Q₁₃, Q₁₄); the first upper switch (Q₁₁, Q₁₂, Q₁₃, Q₁₄) and the second upper switch (Q₁₁, Q₁₂, Q₁₃, Q₁₄) coupled at a first upper node (N11, N12, N13), the second upper switch (Q₁₁, Q₁₂, Q₁₃, Q₁₄) and the third upper switch (Q₁₁, Q₁₂, Q₁₃, Q₁₄) coupled at a second upper node (N11, N12, N13), and the third upper switch (Q₁₁, Q₁₂, Q₁₃, Q₁₄) and the fourth upper switch (Q₁₁, Q₁₂, Q₁₃, Q₁₄) coupled at a third upper node (N11, N12, N13),
the lower leg (112) comprising four lower switches (Q₂₁, Q₂₂, Q₂₃, Q₂₄), respectively a first lower switch (Q₂₁, Q₂₂, Q₂₃, Q₂₄), a second lower switch (Q₂₁, Q₂₂, Q₂₃, Q₂₄), a third lower switch (Q₂₁, Q₂₂, Q₂₃, Q₂₄), and a fourth lower switch (Q₂₁, Q₂₂, Q₂₃, Q₂₄); the first lower switch (Q₂₁, Q₂₂, Q₂₃, Q₂₄) and the second lower switch (Q₂₁, Q₂₂, Q₂₃, Q₂₄) coupled at a first lower node (N21, N22, N23), the second lower switch (Q₂₁, Q₂₂, Q₂₃, Q₂₄) and the third lower switch (Q₂₁, Q₂₂, Q₂₃, Q₂₄) coupled at a second lower node (N21, N22, N23), and the third lower switch (Q₂₁, Q₂₂, Q₂₃, Q₂₄) and the fourth lower switch (Q₂₁, Q₂₂, Q₂₃, Q₂₄) coupled at a third lower node (N21, N22, N23),
wherein the first upper switch (Q₁₁, Q₁₂, Q₁₃, Q₁₄) and the first lower switch (Q₂₁, Q₂₂, Q₂₃, Q₂₄) are coupled at the first middle node (N1),
wherein the number of the at least one flying capacitor (FC, FC1, FC2, FC3, FC-1, FC-2) is three, respectively a first flying capacitor (FC, FC1, FC2, FC3, FC-1, FC-2), a second flying capacitor (FC, FC1, FC2, FC3, FC-1, FC-2), and a third flying capacitor (FC, FC1, FC2, FC3, FC-1, FC-2); the first flying capacitor (FC, FC1, FC2, FC3, FC-1, FC-2) is coupled between the first upper node (N11, N12, N13) and the first lower node (N21, N22, N23), the second flying capacitor (FC, FC1, FC2, FC3, FC-1, FC-2) is coupled between the second upper node (N11, N12, N13) and the second lower node (N21, N22, N23), and the third flying capacitor (FC, FC1, FC2, FC3, FC-1, FC-2) is coupled between the third upper node (N11, N12, N13) and the third lower node (N21, N22, N23).

4. The flying-capacitor converter with zero-voltage switching as claimed in claim 1, wherein the input inductor (Lboost, Lboost-1, Lboost-2) and the resonant inductor (Lr) form an integrated coupling structure.

5. The flying-capacitor converter with zero-voltage switching as claimed in claim 1, wherein the flying-capacitor converter operates in a N-phase structure,
the N-phase flying-capacitor converter comprises:
N sets of the input inductors (Lboost, Lboost-1, Lboost-2), N sets of the fast-switching switch legs (11), N sets of the at least one flying capacitor (FC, FC1, FC2, FC3, FC-1, FC-2), and N sets of the resonant tanks (13), and
one set of the slow-switching switch leg (12) and one set of the output capacitor (Co).

6. The flying-capacitor converter with zero-voltage switching as claimed in claim 5, wherein the input inductor (Lboost, Lboost-1, Lboost-2) in each phase is correspondingly coupled with the resonant inductor (Lr) of the resonant tank (13).

7. The flying-capacitor converter with zero-voltage switching as claimed in claim 5, wherein the two resonant inductors (Lr) between two phases are cross-coupled.

8. The flying-capacitor converter with zero-voltage switching as claimed in claim 1, wherein when input power source (Vin) and the output power source (Vo) are both DC power sources, the number of the resonant capacitor (Cr) is one,
the resonant capacitor (Cr) and the resonant inductor (Lr) coupled in series to form a series-connected branch; a first end of the series-connected branch is coupled to the first middle node (N1), and a second end of the series-connected branch is coupled to a second end of the upper leg (111).

9. The flying-capacitor converter with zero-voltage switching as claimed in claim 1, wherein when input power source (Vin) and the output power source (Vo) are both DC power sources, the number of the resonant capacitor (Cr) is one,
the resonant capacitor (Cr) and the resonant inductor (Lr) coupled in series to form a series-connected branch; a first end of the series-connected branch is coupled to the first middle node (N1), and a second end of the series-connected branch is coupled to a second end of the lower leg (112).

10. The flying-capacitor converter with zero-voltage switching as claimed in claim 1, wherein when input power source (Vin) and the output power source (Vo) are both DC power sources, the number of the resonant capacitors (Cr) is two, respectively a first resonant capacitor (Cr) and a second resonant capacitor (Cr),
the resonant inductor (Lr) is coupled to a commonly-connected node between the first resonant capacitor (Cr) and the second resonant capacitor (Cr) to form two branches, respectively a first branch and a second branch; a first end of the first branch is coupled to the first middle node (N1), and a second end of the first branch is coupled to a second end of the upper leg (111); a first end of the second branch is coupled to the first middle node (N1), and a second end of the second branch is coupled to a second end of the lower leg (112).

11. The flying-capacitor converter with zero-voltage switching as claimed in claim 1, wherein when the input power source (Vin) is an AC power source and the output power source (Vo) is a DC power source, the flying-capacitor converter comprises:
two input inductors (Lboost, Lboost-1, Lboost-2), two fast-switching switch legs (11), two flying capacitors (FC, FC1, FC2, FC3, FC-1, FC-2), and
a resonant tank (13) and an output capacitor (Co),
wherein the resonant tank (13) is coupled between two first middle nodes (N1) of the two fast-switching switch legs (11).

## Amended claims

### Amended claims in accordance with Rule 137(2) EPC.

1. A flying-capacitor converter, configured to receive an input power source (Vin) and convert the input power source (Vin) into an output power source (Vo), wherein the flying-capacitor converter comprises:
an input inductor (Lboost, Lboost-1, Lboost-2), a first end of the input inductor (Lboost, Lboost-1, Lboost-2) configured to receive the input power source (Vin),
a fast-switching switch leg (11), comprising an upper leg (111) having a plurality of upper switches (Q₁₁, Q₁₂, Q₁₃, Q₁₄), and a lower leg (112) having a plurality of lower switches (Q₂₁, Q₂₂, Q₂₃, Q₂₄); a first end of the upper leg (111) and a first end of the lower leg (112) coupled at a first middle node (N1), and the first middle node (N1) coupled to a second end of the input inductor (Lboost, Lboost-1, Lboost-2); any two upper switches (Q₁₁, Q₁₂, Q₁₃, Q₁₄) coupled in series at an upper node (N11, N12, N13) and any two lower switches (Q₂₁, Q₂₂, Q₂₃, Q₂₄) coupled in series at a lower node (N21, N22, N23),
a slow-switching switch leg (12), comprising a slow-switching upper switch (Q₁) and a slow-switching lower switch (Q₂), and the slow-switching upper switch (Q₁) and the slow-switching lower switch (Q₂) coupled at a second middle node (N2),
at least one flying capacitor (FC, FC1, FC2, FC3, FC-1, FC-2), correspondingly coupled between the upper node (N11, N12, N13) and the lower node (N21, N22, N23), and
an output capacitor (Co), coupled in parallel to the slow-switching switch leg (12), and configured to output the output power source (Vo);
**characterized in that**
the flying-capacitor converter has zero-voltage switching and comprises a resonant tank (13), comprising a resonant inductor (Lr) and a resonant capacitor (Cr), and the resonant inductor (Lr) and the resonant capacitor (Cr) coupled in series between the first middle node (N1) and the second middle node (N2).

2. The flying-capacitor converter with zero-voltage switching as claimed in claim 1, wherein the flying-capacitor converter is configured to provide a three-level output,
the upper leg (111) comprising two upper switches (Q₁₁, Q₁₂, Q₁₃, Q₁₄), respectively a first upper switch (Q₁₁, Q₁₂, Q₁₃, Q₁₄) and a second upper switch (Q₁₁, Q₁₂, Q₁₃, Q₁₄), and the first upper switch (Q₁₁, Q₁₂, Q₁₃, Q₁₄) and the second upper switch (Q₁₁, Q₁₂, Q₁₃, Q₁₄) coupled at a first upper node (N11, N12, N13),
the lower leg (112) comprising two lower switches (Q₂₁, Q₂₂, Q₂₃, Q₂₄), respectively a first lower switch (Q₂₁, Q₂₂, Q₂₃, Q₂₄) and a second lower switch (Q₂₁, Q₂₂, Q₂₃, Q₂₄), and the first lower switch (Q₂₁, Q₂₂, Q₂₃, Q₂₄) and the second lower switch (Q₂₁, Q₂₂, Q₂₃, Q₂₄) coupled at a first lower node (N21, N22, N23),
wherein the first upper switch (Q₁₁, Q₁₂, Q₁₃, Q₁₄) and the first lower switch (Q₂₁, Q₂₂, Q₂₃, Q₂₄) are coupled at the first middle node (N1),
wherein the number of the at least one flying capacitor (FC, FC1, FC2, FC3, FC-1, FC-2) is one, and the flying capacitor (FC, FC1, FC2, FC3, FC-1, FC-2) is coupled between the first upper node (N11, N12, N13) and the first lower node (N21, N22, N23).

3. The flying-capacitor converter with zero-voltage switching as claimed in claim 1, wherein the flying-capacitor converter is configured to provide a five-level output,
the upper leg (111) comprising four upper switches (Q₁₁, Q₁₂, Q₁₃, Q₁₄), respectively a first upper switch (Q₁₁, Q₁₂, Q₁₃, Q₁₄), a second upper switch (Q₁₁, Q₁₂, Q₁₃, Q₁₄), a third upper switch (Q₁₁, Q₁₂, Q₁₃, Q₁₄), and a fourth upper switch (Q₁₁, Q₁₂, Q₁₃, Q₁₄); the first upper switch (Q₁₁, Q₁₂, Q₁₃, Q₁₄) and the second upper switch (Q₁₁, Q₁₂, Q₁₃, Q₁₄) coupled at a first upper node (N11, N12, N13), the second upper switch (Q₁₁, Q₁₂, Q₁₃, Q₁₄) and the third upper switch (Q₁₁, Q₁₂, Q₁₃, Q₁₄) coupled at a second upper node (N11, N12, N13), and the third upper switch (Q₁₁, Q₁₂, Q₁₃, Q₁₄) and the fourth upper switch (Q₁₁, Q₁₂, Q₁₃, Q₁₄) coupled at a third upper node (N11, N12, N13),
the lower leg (112) comprising four lower switches (Q₂₁, Q₂₂, Q₂₃, Q₂₄), respectively a first lower switch (Q₂₁, Q₂₂, Q₂₃, Q₂₄), a second lower switch (Q₂₁, Q₂₂, Q₂₃, Q₂₄), a third lower switch (Q₂₁, Q₂₂, Q₂₃, Q₂₄), and a fourth lower switch (Q₂₁, Q₂₂, Q₂₃, Q₂₄); the first lower switch (Q₂₁, Q₂₂, Q₂₃, Q₂₄) and the second lower switch (Q₂₁, Q₂₂, Q₂₃, Q₂₄) coupled at a first lower node (N21, N22, N23), the second lower switch (Q₂₁, Q₂₂, Q₂₃, Q₂₄) and the third lower switch (Q₂₁, Q₂₂, Q₂₃, Q₂₄) coupled at a second lower node (N21, N22, N23), and the third lower switch (Q₂₁, Q₂₂, Q₂₃, Q₂₄) and the fourth lower switch (Q₂₁, Q₂₂, Q₂₃, Q₂₄) coupled at a third lower node (N21, N22, N23),
wherein the first upper switch (Q₁₁, Q₁₂, Q₁₃, Q₁₄) and the first lower switch (Q₂₁, Q₂₂, Q₂₃, Q₂₄) are coupled at the first middle node (N1),
wherein the number of the at least one flying capacitor (FC, FC1, FC2, FC3, FC-1, FC-2) is three, respectively a first flying capacitor (FC, FC1, FC2, FC3, FC-1, FC-2), a second flying capacitor (FC, FC1, FC2, FC3, FC-1, FC-2), and a third flying capacitor (FC, FC1, FC2, FC3, FC-1, FC-2); the first flying capacitor (FC, FC1, FC2, FC3, FC-1, FC-2) is coupled between the first upper node (N11, N12, N13) and the first lower node (N21, N22, N23), the second flying capacitor (FC, FC1, FC2, FC3, FC-1, FC-2) is coupled between the second upper node (N11, N12, N13) and the second lower node (N21, N22, N23), and the third flying capacitor (FC, FC1, FC2, FC3, FC-1, FC-2) is coupled between the third upper node (N11, N12, N13) and the third lower node (N21, N22, N23).

4. The flying-capacitor converter with zero-voltage switching as claimed in claim 1, wherein the input inductor (Lboost, Lboost-1, Lboost-2) and the resonant inductor (Lr) form an integrated coupling structure.

5. The flying-capacitor converter with zero-voltage switching as claimed in claim 1, wherein the flying-capacitor converter operates in a N-phase structure,
the N-phase flying-capacitor converter comprises:
N sets of the input inductors (Lboost, Lboost-1, Lboost-2), N sets of the fast-switching switch legs (11), N sets of the at least one flying capacitor (FC, FC1, FC2, FC3, FC-1, FC-2), and N sets of the resonant tanks (13), and
one set of the slow-switching switch leg (12) and one set of the output capacitor (Co).

6. The flying-capacitor converter with zero-voltage switching as claimed in claim 5, wherein the input inductor (Lboost, Lboost-1, Lboost-2) in each phase is correspondingly coupled with the resonant inductor (Lr) of the resonant tank (13).

7. The flying-capacitor converter with zero-voltage switching as claimed in claim 5, wherein the two resonant inductors (Lr) between two phases are cross-coupled.
